# EUROPÄISCHE PATENTSCHRIFT

(11) **EP 1 245 906 B1**
(45) Veröffentlichungstag und Bekanntmachung des Hinweises auf die Patenterteilung: **02.08.2006**
(21) Anmeldenummer: 01108005.8
(22) Anmeldetag: 29.03.2001
(51) Int. Cl.: F24D 13/04, H05B 6/64

(54) **Gebäudeheizung**
Heating for a building
Chauffage pour bâtiment

(43) Veröffentlichungstag der Anmeldung: 02.10.2002
(73) Patentinhaber: Moletherm Holding AG, 4502 Solothurn (CH)
(72) Erfinder: Reichelt, Helmut, 01069 Dresden (DE)
(74) Vertreter: Neubauer, Hans-Jürgen

(56) Entgegenhaltungen:
- WO-A-00/25552
- DE-A- 3 139 318
- DE-A- 4 038 495
- FR-A- 2 284 094
- NL-A- 8 201 323

## Beschreibung

Die Erfindung betrifft eine Gebäudeheizung nach dem Oberbegriff des Anspruchs 1.

Konventionelle Gebäudeheizungen bestehen im wesentlichen aus einem Heizkessel als Ölheizkessel oder Gasheizkessel, an den mittels Rohrleitungen als Vorlaufleitungen und Rücklaufleitungen in Gebäuderäumen montierte Heizkör per angeschlossen sind. Die im Heizkessel erzeugte Wärme wird über das Transportmedium Warmwasser in einem oder mehreren Heizkreisläufen zu den Heizkörpern transportiert, die die Funktion von Wärmeübertragern für die Beheizung der jeweiligen Räume haben.

Solche Gebäudeheizungen erfordern relativ viel Heizenergie. Aus Gründen eines wirtschaftlichen Heizungsbetriebs, der Verminderung des Schadstoffausstoßes und der bekannten Begrenztheit fossiler Brennstoffe ist es ein ständiges Bestreben, Gebäudeheizungen effektiver zu gestalten, wozu bereits Lösungen bekannt sind:

Eine allgemein bekannte Gebäudeheizung ist aus zwei Teilheizsystemen aufgebaut und wird insbesondere in sogenannten Energiesparhäusem eingesetzt. Ein Teilheizungssystem ist als Basissystem für Heizbedingungen bei kühlen Außentemperaturen ausgelegt und umfasst Wärmequellen, deren Wärmeenergie ganz oder nahezu zum Nulltarif zur Verfügung steht und vor allem keine Verbrennung fossiler Brennstoffe erfordert. Solche Wärmequellen können Solarmodule und/oder Erdwärmemodule und/oder Kühler von Stromgeneratoren aus Biogasanlagen sein. Solche Wärmequellen weisen integrierte Wärmequellen-Wärmetauscher auf, durch die das Wärmetransportmedium Warmwasser zu den Heizkörpern oder ggf. zu Wärmezwischenspeichem pumpbar ist.

Ein Nachteil dieser vorstehend genannten oder ähnlicher Wärmequellen besteht darin, dass Wärme daraus entweder nur in bestimmten Zeitabschnitten oder mit starken Schwankungen zur Verfügung steht. Beispielsweise steht Wärme aus Solarenergie in heiztechnisch beachtlichem Umfang nur bei ausreichender Sonneneinstrahlung zur Verfügung, die gerade in den Zeiten der Heizperioden oft nicht vorhanden ist. Somit ist der mit diesem Heizungssystem allein erzielbare Heizeffekt, insbesondere für Heizbedingungen bei relativ kalten Außentemperaturen, regelmäßig nicht ausreichend. Es ist daher zusätzlich ein weiteres Teilheizungssystem als Zuschaltsystem erforderlich, das entsprechend der eingangs erwähnten, herkömmlichen Gebäudeheizung mit einem Heizkessel für fossile Brennstoffe aufgebaut ist und das ebenfalls an die Vor laufrohre und Rücklaufrohre zu den Heizkörpern angeschlossen ist. Zwischen den Teilheizsystemen kann umgeschaltet werden oder sie können parallel betrieben werden, wobei den Heizkörpern wahlweise aus den einzelnen Wärmequellen oder gemeinsam aus den Wärmequellen Wärmeenergie mittels Warmwasser zuführbar ist. Eine dafür erforderliche Schalteinheit ist in eine übliche Heizungssteuerung mit Temperaturregelung integrierbar, wobei es bekannt ist, solche Umschaltungen und/oder Zuschaltungen selbsttätig in Abhängigkeit bestimmbarer Randbedingungen auszuführen.

Ersichtlich ist der Aufwand für die Erstellung der vorstehend beschriebenen Gebäudeheizungen aus solchen kombiniert schaltbaren Teilheizungssystemen erheblich, da für relativ kalte Zeiten eine komplette Heizanlage für fossile Brennstoffe in Verbindung mit Anschlüssen und Tankbehältern für solche fossilen Brennstoffe als Back-up-System bereitzustellen ist, obwohl die Gebäudeheizung grundsätzlich mit alternativen Energien, beispielsweise mit Sonnenenergie, ggfs. in Verbindung mit Schichtwärmespeichern, betrieben werden soll. Zudem fallen neben den hohen Erstellungskosten für das Teilheizungssystem für fossile Brennstoffe auch die dafür erforderlichen Wartungen und Wartungskosten an. Aufgrund dieser Gegebenheiten sind die Erstellungskosten solcher kombinierter Heizungssysteme im Vergleich zu den einfachen, her kömmlichen eingangs beschriebenen Gebäudeheizungen wesentlich höher und die Einsparpotentiale sind daher insgesamt relativ gering, so dass solche kombinierte Heizungssysteme trotz ihrer zweifellosen Vorteile für die Umwelt noch nicht allgemein eingesetzt werden.

Weiter sind Flächenheizelemente zum Aufbau eines Heizsystems bekannt (DE 21 51 626 A), die eine elektrisch leitende Beschichtung aufweisen und mit elektrischen Anschlüssen versehen sind. Ein solches Flächenheizelement wird in der Art einer Widerstandsheizung betrieben, in dem entsprechend dem elektrischen Widerstand der Beschichtung und dem durchgeleiteten, elektrischen Strom unmittelbar im Flächenheizelement Wärme erzeugt wird, die in einen Gebäuderaum abstrahlt. Der Betrieb solcher elektrischer Widerstandsheizungen als alleinige Gebäudeheizungen ist sehr kostenintensiv und damit unwirtschaftlich.

Bei einer weiteren, bekannten Gebäudeheizung (DE 40 38 495 A1) gemäß dem Oberbegriff des Anspruchs 1 ist das zweite Teilheizungssystem eine als Strahlungsfläche auf einer Wärmeübertrager-Außenfläche unmittelbar aufgebrachte elektrische Strahlungsheizung, die mittels Thermostat gesteuert wird.

Eine ebenfalls bekannte Gebäudeheizung (FR 2 284 094 A) gemäß dem Oberbegriff des Anspruchs 1 ist eine Niederenergieheizung, wobei das erste Teilheizungssystem als Basissystem für Heizleistungen bei kühlen Außentemperaturen ausgelegt ist und das zweite Teilheizungssystem durch eine Schalteinheit selbsttätig, temperaturabhängig zuschaltbar ist, wenn die Heizleistung des ersten Teilsystems nicht mehr ausreicht.

Weiter ist eine elektrische Strahlungsheizung bekannt (WO 00 25552 A), die als Strahlungsfläche durch Beschichten unmittelbar oder mittelbar auf die Oberfläche eines Trägers aufgebracht wird.

Aufgabe der Erfindung ist es, eine gattungsgemäße Gebäudeheizung aus einem ersten Teilheizungssystem und einem zweiten Teilheizungssystem so weiterzubilden, dass eine kostengünstige Herstellung und Montage bei geringem Platzbedarf und hoher Funktionalität und Variabilität möglich ist.

Diese Aufgabe wird mit den Merkmalen des Anspruchs 1 gelöst.

Gemäß Anspruch 1 benutzt eine Beschichtung als Träger den Wärmeübertrager des ersten Teilheizungssystems, so dass der Wärmeübertrager damit eine zweifache Funktion übernimmt. Die Beschichtung bildet als Strahlungsfläche einer Strahlungsheizung die Wärmequelle des zweiten Teilheizsystems, wobei die Beschichtung elektrisch aktivierbar ist und auf wenigstens einem Teil einer Wärmeübertrager-Außenfläche flächig unmittelbar oder mittelbar aufgebracht ist.

Damit sind für das zweite Teilheizungssystem weder ein teurer Heizkessel mit Brenner und ggfs. einem Öltank noch die dafür erforderlichen Räume, Rohrleitungsanschlüsse und Steuerungen erforderlich. Durch die integrale Anordnung der Strahlungsflächen auf den Wärmeübertragern des ersten Teilheizungssystems sind für das zweite Teilheizungssystem in den zu beheizenden Räumen auch keine zusätzlichen Räume und/oder Wandflächen zur Verfügung zu stellen. Die Wärmeübertrager haben somit eine Doppelfunktion als herkömmliche Wärmeübertrager für das erste Teilheizungssystem und zugleich als Trägerelemente für die Strahlungsflächen des zweiten Teilheizungssystems. Durch diese integrierte Doppelfunktion kann die Kombination Wärmeübertrager/Strahlungsfläche vorteilhaft als jeweils ein Bauteil bei einem Hersteller als Modul vorgefertigt werden. Die Montage bei der Erstellung der Gebäudeheizung der beiden integrierten Raumwärmequellenelemente Wärmeübertrager/Strahlungsfläche erfolgt dann vorteilhaft in nur einem Arbeitsgang. Dadurch entstehen nur geringe Kosten bei der Herstellung und Montage. Zudem ist das erste Teilheizungssystem als Basissystem für Heizbedingungen bei kühlen Außentemperaturen ausgelegt ist und das zweite Teilheizungssystem mit den elektrisch aktivierbaren Strahlungsflächen durch die Schalteinheit bei relativ kalten Außentemperaturen, bei denen die Heizleistung des ersten Teilheizungssystems alleine nicht mehr ausreicht, zuschaltbar ist. Diese Zuschaltung soll bevorzugt selbsttätig erfolgen und kann in Abhängigkeit einer Außentemperatur und/oder Innenraumtemperatur ggfs. auch in Verbindung mit einem festgestellten Temperaturverlauf erfolgen. Damit ist diese Gebäudeheizung bestens geeignet als Niederenergieheizung.

Die erfindungsgemäße Gebäudeheizung eignet sich nach Anspruch 2 insbesondere für eine Anordnung, in der das erste Teilheizungssystem eine Wärmequelle in der Art wenigstens eines Solarmoduls und/oder wenigstens eines Erdwärmemoduls und/oder eines Kühlers eines Stromgenerators einer Biogasanlage umfasst. Als Wärmetransport-Medium wird zweckmäßig gesteuert pumpbares Warmwasser verwendet. Grundsätzlich ist die erfindungsgemäße Anordnung auch bei Warmluftheizungen ausführbar.

Für eine weitere Reduzierung der Energiekosten der Gebäudeheizung kann gemäß Anspruch 3 auch die elektrische Energie für das zweite Teilheizungssystem ggfs. über alternative Energieerzeugungseinrichtungen, wie Wind-Stromgeneratoren und/oder Biogas-Stromgeneratoren und/oder Wasserkraft-Stromgeneratoren zur Verfügung gestellt oder zumindest ergänzt werden.

In einer bevorzugten Ausführungsform gemäß Anspruch 4 sind die Wärmeübertrager Flachheizkörper mit weitgehend ebenen Frontflächen, die Flächen parallel an Raumwänden mit in den Raum weisenden Frontflächen montiert sind. Die Beschichtung ist dann jeweils auf diesen in den Raum weisenden Frontflächen angebracht. Auf solchen Wärmeübertragern ist die Beschichtung einfach, großflächig und mit guter Funktion anbringbar.

Üblicherweise sind Wärmeübertrager aus Metall gegossen oder aus Blechen geformt. Gemäß Anspruch 5 ist es dann wesentlich, dass zwischen der Wärmeübertrager-Außenfläche als Trägerfläche und der Beschichtung eine elektrisch isolierende Zwischenschicht angebracht wird. Diese Zwischenschicht kann ebenfalls eine Beschichtung, beispielsweise eine Farbbeschichtung, sein, oder als aufgeklebte Folie ausgebildet sein, die dann ihrerseits eine Trägerfläche für die Beschichtung als Strahlungsfläche darstellt.

In einer besonders bevorzugten Ausführungsform hat die Beschichtung eine Zusammensetzung, wie sie mit Anspruch 6 angegeben ist. Eine solche Beschichtung ist mit dem weiter beanspruchten Oberwellengenerator zur Abstrahlung elektromagnetischer Wellen mit einem Schwingungsspektrum im Frequenzbereich von molekularen Eigenschwingungen anregbar. In den weiteren Ansprüchen 7 bis 9 werden zweckmäßige und vorteilhafte Weiterbildungen im Zusammenhang mit dieser Art von Beschichtung angegeben, welche im Heizbetrieb im wesentlichen kühl bleibt und Heizeffekte durch Resonanzen im zu beheizenden Medium durch Anregung von molekularen Eigenschwingungen erzeugt. Diese an sich aus DE 198 49 432 A1 bekannten Heizeffekte und Heizanordnungen eignen sich hervorragend als Back-up-System in der erfindungsgemäßen Weiterbildung und Kombination zu einer Niedrigenergieheizung.

Anhand einer Zeichnung wird die Erfindung näher erläutert.

Die einzige Figur zeigt einen schematischen Querschnitt durch ein als Nieder energiehaus ausgelegtes Gebäude 1, das mit einer hier lediglich ebenfalls äußerst schematisch dargestellten entsprechenden Wärmedämmung 2 versehen ist und als Gebäudeheizung eine Niederenergieheizung 3 aufweist.

Diese Niederenergieheizung besteht aus einem ersten Teilheizungssystem 4, das als Wärmequelle ein hier beispielsweise gewähltes Solarmodul 5 aufweist. Dieses Solarmodul ist über Rohrleitungen 6, 7 mit einer Steuer- und Regeleinrichtung 8 gekoppelt, das eine Pumpeneinrichtung 9 mit mehreren Pumpen aufweist, wobei eine der Pumpen der Pumpeneinrichtung 9 Kaltwasser über die Rohrleitung 6 zum Solarmodul 5 pumpt, wo es erwärmt und anschließend als Warmwasser über die Rohrleitung 7 in einen Warmwasser-Wärmeschichtspeicher 10 eingeleitet wird.

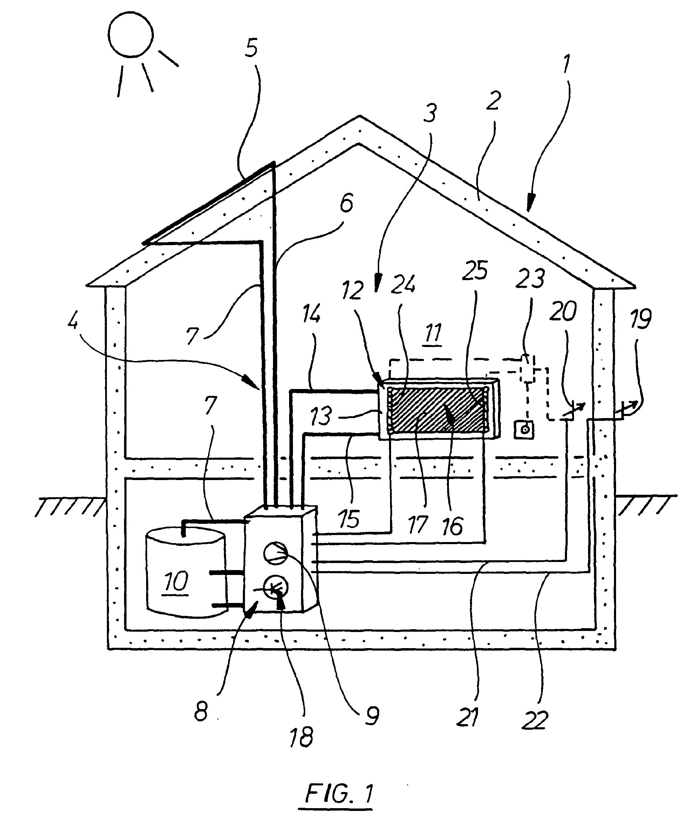

Das erste Teilheizungssystem 4 umfasst weiter wenigstens einen in einem Gebäuderaum 11 montierten Wärmeübertrager als z. B. Flachheizkörper 12, was in der Darstellung der Fig. 1 beispielhaft und lediglich äußerst schematisch dargestellt ist, der jeweils eine weitgehend ebene Frontfläche 13 aufweist und in etwa flächenparallel an einer Raumwand mit in den Gebäuderaum 11 weisender Frontfläche 13 montiert ist.

Dieser Flachheizkörper 12 ist unter Zwischenschaltung der Steuer- und Regeleinrichtung 8 über eine Vorlaufleitung 14 und eine Rücklaufleitung 15 mit dem Warmwasser-Wärmeschichtspeicher 10 verbunden. Bei Bedarf kann über die Vorlaufleitung 14 Warmwasser in die Flachheizkörper 12 mittels wenigstens einer weiteren Pumpe der Pumpeneinrichtung 9 gepumpt werden, um den Gebäuderaum 11 unter Wärmeabgabe an die Umgebungsluft zu erwärmen. Das entsprechend abgekühlte Wasser wird dann über die Rücklaufleitung 15 abgeführt. Dieses erste Teilheizungssystem 4 bildet somit das Basissystem für Heizleistungen bei kühlen Außentemperaturen.

Ferner umfasst die Niederenergieheizung 3 noch ein zweites Teilheizungssystem, die als Strahlungsheizung 16 ausgelegt ist und eine elektrisch aktivierbare auf die Frontfläche 13 jedes Flachkörpers 12 flächig aufgebrachte Strahlungsfläche 17 aufweist. Weiter umfasst die Strahlungsheizung 16 eine hier lediglich äußerst schematisch dargestellte Heizungssteuerung 18 mit einer Temperaturregelung und einer Schalteinheit zur Abschaltung oder Umschaltung der Teilheizungssysteme 4, 16 für einen Einzelbetrieb oder zur Zuschaltung eines Teilheizungssystems zum anderen Teilheizungssystem für einen gemeinsamen Betrieb. Die Heizungssteuerung 18 ist ebenfalls in der Steuer- und Regeleinrichtung 8 integriert und mit einem Außentemperaturfühler 19 sowie einem Innentemperaturfühler 20 über entsprechende Leitungen 21, 22 gekoppelt.

Der Flachheizkörper 12 ist aus Metall hergestellt, wobei zwischen dessen Frontfläche 13 als Trägerfläche und der aufgebrachten Beschichtung als Strahlungsfläche 17 eine hier nicht dargestellte isolierende Zwischenschicht angebracht sein kann.

Die Heizungssteuerung 18 weist ferner einen Oberwellengenerator 23 auf, der z. B. einen Triac und/oder einen Doppel-MOSFET als elektrischen Baustein umfasst, der bei einer Ansteuerung mit einer Ansteuerschwingung eine steile Stromanstiegsgeschwindigkeit entsprechend einer steilen Anstiegsflanke aufweist und damit zur Erzeugung eines hohen Oberwellenanteils geeignet ist.

Wie dies in der Fig. 1 lediglich äußerst schematisch dargestellt ist, ist der Oberwellengenerator 23 an zwei die Strahlungsfläche 17 begrenzende elektrische Leiter angekoppelt, die durch im wesentlichen parallel ausgerichtete Kupferfolienbänder 24, 25 gebildet sind. Dadurch wird eine Anregung der Strahlungsfläche 17 zur Abstrahlung elektromagnetischer Wellen mit einem Schwingungsspektrum im Frequenzbereich von molekularen Eigenschwingungen erreichbar, wobei die Heizwirkung der Strahlungsfläche 17 durch Veränderung der Amplituden und/oder der Frequenz der Ansteuerschwingungen des Oberwellengenerators 23 steuerbar und/oder regelbar ist.

Das als Strahlungsheizung 16 ausgebildete zweite Teilheizungssystem ist durch die Schalteinheit selbsttätig in Abhängigkeit einer Außentemperatur und/oder einer Innentemperatur bei relativ kalten Außentemperaturen, bei dem die Heizleistung des ersten Teilheizungssystems 4 nicht mehr ausreicht, zuschaltbar.

Der elektrische Kontakt zur Strahlungsfläche 17 ist als kapazitive und/oder induktive Ankopplung ausgebildet, wobei die Strahlungsfläche 17 unter oder über den Kupferfolienbändern 24, 25 liegt oder diese alternativ dazu in die Strahlungsfläche 17 eingebettet sind, was hier jedoch nicht dargestellt ist. Bezüglich der Zusammensetzung der die Beschichtung bildenden Strahlungsfläche 17 wird auf die Ansprüche bezuggenommen.

Der Niederenergieheizung 3 kann ferner ein hier nicht dargestellter Wind-Stromgenerator und/oder ein Biogas-Stromgenerator und/oder ein Wasserkraft-Stromgenerator zugeordnet sein zur Erzeugung der elektrischen Energie für die Strahlungsheizung 16.

## Patentansprüche

1. Gebäudeheizung
bestehend aus einem ersten Teilheizungssystem (4),
mit wenigstens einer ersten Wärmequelle (5) mit integriertem Wärmequellen-Wärmetauscher,
mit von der Wärmequelle beabstandeten und in wenigstens einem Gebäuderaum (11) montierten Wärmeübertragern (12) als Heizkörpern mit Wärmeübertrager-Außenflächen und
mit Rohrleitungen (14,15) als Vorlaufleitungen und Rücklaufleitungen zwischen dem Wärmequellen-Wärmetauscher und den Wärmeübertragern (12), wobei die Rohrleitungen (14,15) der Wärmequellen-Wärmetauscher und die Wärmeübertrager (12) ein strömbares Wärmetransport-Medium enthalten,
bestehend aus einem zweiten Teilheizungssystem (16), mit einer zweiten Wärmequelle, und
bestehend aus einer Heizungssteuerung (18) mit wenigstens einer Temperaturregelung und einer Schalteinheit zur Abschaltung oder Umschaltung der Teilheizungssysteme (4,16) fur einen Einzelbetrieb oder zur Zuschaltung eines Teilheizungssystems zum anderen Teilheizungssystem für einen gemeinsamen Betrieb,
**dadurch gekennzeichnet,**
**dass** eine Beschichtung als Träger den Wärmeübertrager (12) des ersten Teilheizungssystems (4) benutzt, so dass der Wärmeübertrager (12) damit eine zweifache Funktion übemimmt und die Beschichtung als Strahlungsfläche (17) einer Strahlungsheizung die Wärmequelle des zweiten Teilheizsystems (16) bildet, wobei die Beschichtung elektrisch aktivierbar ist und auf wenigstens einen Teil einer Wärmeübertrager-Frontfläche (13) flächig unmittelbar oder mittelbar aufgebracht ist,
**dass** die Gebäudeheizung eine Niederenergieheizung (3) ist, wobei das erste Teilheizungssystem (4) als Basissystem für Heizleistungen bei kühlen Außeritemperaturen ausgelegt ist, und
**dass** das zweite Teilheizungssystem (16) durch die Schalteinheit (18) selbsttätig in Abhängigkeit einer Außentemperatur und/oder Innenraumtemperatur bei relativ kalten Außentemperaturen, bei denen die Heizleistung des ersten Teilheizungssystems (4) nicht mehr ausreicht, zuschaltbar ist.

2. Gebäudeheizung nach Anspruch 1, **dadurch gekennzeichnet, dass** das erste Teilheizungssystem (4) eine Wärmequelle in der Art wenigstens eines Solarmoduls (5) und/oder wenigstens eines Erdwärmemoduls und/oder eines Kühlers eines Stromgenerators einer Biogasanlage aufweist, wobei das Wärmetransport-Medium gesteuert pumpbares Warmwasser ist.

3. Gebäudeheizung nach Anspruch 1 oder Anspruch 2, **dadurch gekennzeichnet, dass** der Gebäudeheizung (3) ein Wind-Stromgenerator und/oder ein Biogas-Stromgenerator und/oder Wasserkraft-Stromgenerator zugeordnet ist zur Erzeugung der elektrischen Energie für das zweite Teilheizungssystem (16).

4. Gebäudeheizung nach einem der Ansprüche 1 bis 3, **dadurch gekennzeichnet,**
**dass** die Wärmeübertrager Flachheizkörper (12) mit weitgehend ebenen Frontflächen (13) sind und die Flachheizkörper (12) etwa flächenparallel an Raumwänden mit in den Raum weisenden Frontflächen (13) montierbar sind.

5. Gebäudeheizung nach einem der Ansprüche 1 bis 4, **dadurch gekennzeichnet, dass** die Wärmeübertrager (12) aus Metall hergestellt sind und wenigstens zwischen einer Wärmeübertrager-Frontfläche (13) als Trägerfläche und einer aufgebrachten Beschichtung als Strahlungsfläche (17) eine elektrisch isolierende Zwischenschicht angebracht ist.

6. Gebäudeheizung nach einem der Ansprüche 1 bis 5, **dadurch gekennzeichnet,**
**dass** die Beschichtung (17) von zwei damit verbundenen elektrischen Leitern (24, 25) begrenzt ist und aus einem Beschichtungsmaterial besteht, das zusammengesetzt ist aus
a. 55 bis 65 % Stoffmengenanteile einer Grundsubstanz aus
• 39 bis 49 % Stoffmengenanteile Bindemittel,
• 18 bis 23 % Stoffmengenanteile Isolationsmittel,
• 18 bis 24 % Stoffmengenanteile Dispergiermittel,
• 12 bis 16 % Stoffmengenanteile destilliertes Wasser
und
b. 35 bis 45 % Stoffmengenanteile Graphit,
wobei das Bindemittel zusammengesetzt ist aus
• 64 bis 79 % Stoffmengenanteile destilliertes Wasser,
• 4 bis 6 % Stoffimengenanteile sulfuriertes Öl,
• 0,16 bis 0,24 % Stoffmengenanteile Phenole oder 0,05 bis 0,5 % Stoffmengenanteile Benzisothiazolinon,
• 15 bis 19 % Stoffmengenanteile Kasein,
• 0,8 bis 1,2 % Stoffmengenanteile Harnstoff,
• 2 bis 3 % Stoffmengenanteile alkalisches Verdünnungsmittel, und
• 2,5 bis 3,5 % Stoffmengenanteile Caprolactam,
**dass** die Heizungssteuerung (18) einen Oberwellengenerator (23) auf weist, der einen elektrischen Baustein umfasst, welcher bei Ansteuerung mit einer Ansteuerschwingung eine steile Stromanstiegsgeschwindigkeit entsprechend einer steilen Anstiegsflanke aufweist und damit zur Erzeugung eines hohen Oberwellenanteils geeignet ist, und
**dass** der Oberwellengenerator (23) an die beiden die Beschichtung (17) begrenzenden elektrischen Leiter (24, 25) angekoppelt ist für eine Anregung der Beschichtung (17) zur Abstrahlung elektro-magnetischer Wellen mit einem Schwingungsspektrum im Frequenzbereich von molekularen Eigenschwingungen.

7. Gebäudeheizung nach Anspruch 6, **dadurch gekennzeichnet,**
**dass** das sulfurierte Öl bevorzugt sulfatiertes Rizinusöl ist,
**dass** die Phenole carbonisierte, durch Cracken hergestellte Phenole sind oder vorzugsweise Benzisothiazolinon verwendet wird,
**dass** das Verdünnungsmittel ein Lösungsmittel auf Aromaten basis und/oder Alkoholbasis und/oder Esterbasis und/oder Ketonbasis ist,
**dass** das Isolationsmittel ein isolierender Ruß ist,
**dass** das Dispergiermittel eine anorganische und/oder organische, monomere und/oder polymere Substanz ist, und
**dass** das Beschichtungsmaterial ein Thixotropierungsmittel enthält.

8. Heizungsanordnung nach einem der Ansprüche 6 oder 7, **dadurch gekennzeichnet,**
**dass** der elektrische Baustein ein Triac und/oder ein Doppel-MOSFET ist, mit den zugeordneten, an sich bekannten elektronischen Ansteuerungskomponenten, und
**dass** die elektrischen Leiter auf dem Heizelement als im wesentlichen parallel ausgerichtete Kupferfolienbänder (24, 25) ausgebildet sind und der elektrische Kontakt zur Beschichtung (17) als kapazitive und/oder induktive Ankopplung ausgebildet ist, wobei die Beschichtung (17) unter oder über den Kupferfolienbändern (24, 25) liegt oder diese in die Beschichtung (17) eingebettet sind.

9. Heizungsanordnung nach einem der Ansprüche 6 bis 8, **dadurch gekennzeichnet, dass** die Heizwirkung der Beschichtung (17) durch Veränderung der Amplituden und/oder der Frequenz der Ansteuerschwingungen des Oberwellengenerators (23) steuerbar und/oder regelbar ist.

## Claims

1. Building heating system
composed of a first partial heating system (4), having at least one first heat source (5) with integrated heat source heat exchanger,
having heat transfer devices (12) remote from the heat source and installed in at least one building room (11), as radiators, having heat transfer device outside surfaces and
having conduits (14, 15) as preliminary flow lines and return flow lines between the heat source heat exchanger and the heat transfer devices (12), the conduits (14, 15) of the heat source heat exchangers and the heat transfer devices (12) containing a flowable heat transport medium;
composed of a second partial heating system (16), having a second heat source, and
composed of a heating control system (18) having at least one temperature regulator and a switching unit for switching off or switching over the partial heating systems (4, 16) for individual operation or for switching in one partial heating system to the other partial heating system for joint operation,
**characterized**
**in that** a coating utilizes, as a carrier, the heat transfer device (12) of the first partial heating system (4), so that the heat transfer device (12) therefore adopts a dual function and the coating, as a radiation surface (17) of a radiation heating system, forms the heat source of the second partial heating system (16), the coating being electrically activatable and being applied indirectly or directly and extensively to at least part of a heat transfer device front surface (13),
**in that** the building heating system is a low-energy heating system (3), the first partial heating system (4) being designed as a base system for heating outputs when outside temperatures are cold, and
**in that** the second partial heating system (16) can be switched in automatically by the switching unit (18) as a function of an outside temperature and/or interior temperature in cases of relatively cold outside temperatures for which the heating output of the first partial heating system (4) is no longer sufficient.

2. Building heating system according to Claim 1, **characterized in that** the first partial heating system (4) has a heat source in the manner of at least one solar module (5) and/or at least one geothermal module and/or a cooler of a power generator of a biogas plant, the heat transport medium being controlledly pumpable hot water.

3. Building heating system according to Claim 1 or 2, **characterized in that** the building heating system (3) is assigned a wind power generator and/or a biogas power generator and/or hydroelectric generator for generating electrical energy for the second partial heating system (16).

4. Building heating system according to any one of Claims 1 to 3, **characterized in that** the heat transfer devices are flat radiators (12) having largely planer front surfaces (13) and the flat radiators (12) can be installed approximately surface-parallel on room walls, with front surfaces (13) facing into the room.

5. Building heating system according to any one of Claims 1 to 4, **characterized in that** the heat transfer devices (12) are made of metal and an electrically insulating intermediate layer is provided at least between a heat transfer device front surface (13) as carrier surface and an applied coating as radiation surface (17).

6. Building heating system according to any one of Claims 1 to 5, **characterized**
**in that** the coating (17) is bounded by two electrical conductors (24, 25) connected to it and is composed of a coating material composed of
a. 55% to 65% amount of substance fractions of a base substance composed of
• 39% to 49% amount of substance fractions of binding agent,
• 18% to 23% amount of substance fractions of insulator,
• 18% to 24% amount of substance fractions of dispersing agent,
• 12% to 16% amount of substance fractions of distilled water
and
b. 35% to 45% amount of substance fractions of graphite,
the binding agent being composed of
• 64% to 79% amount of substance fractions of distilled water,
• 4% to 6% amount of substance fractions of sulphurated oil,
• 0.16% to 0.24% amount of substance fractions of phenols or 0.05% to 0.5% amount of substance fractions of benzisothiazolinone,
• 15% to 19% amount of substance fractions of casein,
• 0.8% to 1.2% amount of substance fractions of urea,
• 2% to 3% amount of substance fractions of alkaline thinning agent, and
• 2.5% to 3.5% amount of substance fractions of caprolactam,
**in that** the heating control system (18) has a harmonic generator (23) comprising an electrical module which when driven with a control oscillation exhibits a steep current increase rate in accordance with a steep increase edge and thus is suitable for generating a high harmonic component, and
**in that** the harmonic generator (23) is coupled to the two electrical conductors (24, 25) bounding the coating (17), for excitation of the coating (17) for emitting electromagnetic waves with an oscillation spectrum in the frequency range of molecular self-oscillations.

7. Building heating system according to Claim 6, **characterized**
**in that** the sulphurated oil is preferably sulphated castor oil,
**in that** the phenols are carbonized phenols produced by cracking, or preferably benzisothiazolinone is used,
**in that** the thinning agent is an aromatic-based and/or alcohol-based and/or ester-based and/or ketone-based solvent,
**in that** the insulator is an insulating soot,
**in that** the dispersing agent is an inorganic and/or organic monomeric and/or polymeric substance, and
**in that** the coating material comprises a thixotropic agent.

8. Heating system according to either of Claims 6 and 7, **characterized**
**in that** the electrical module is a Triac and/or a double MOSFET, with the associated, conventional electronic control components, and
**in that** the electrical conductors are formed on the heating element as substantially parallel-aligned copper foil strips (24, 25) and the electrical contact with the coating (17) is formed as capacitive and/or inductive coupling, with the coating (17) being under or above the copper foil strips (24, 25), or they are embedded in the coating (17).

9. Heating system according to any one of Claims 6 to 8, **characterized in that** the heating effect of the coating (17) is controllable and/or adjustable by changing of the amplitudes and/or the frequency of the control oscillations of the harmonic generator (23).

## Revendications

1. Chauffage de bâtiment
constitué d'un premier système de chauffage partiel (4),
avec au moins une première source de chaleur (5) avec échangeur thermique à sources de chaleur intégré,
avec récupérateurs de chaleur (12) montés à distance de la source de chaleur et dans au moins une pièce de bâtiment (11) en tant que corps de chauffe avec surfaces externes de récupérateurs de chaleur et
avec des conduites (14, 15) en tant que conduites de départ et conduites de retour entre l'échangeur thermique à sources de chaleur et les récupérateurs de chaleur (12), les conduites (14, 15) de l'échangeur thermique à sources de chaleur et les récupérateurs de chaleur (12) contenant un fluide de transport de chaleur pouvant s'écouler,
comprenant un second système de chauffage partiel (16) avec une seconde source de chaleur, et
comprenant une commande de chauffage (18) avec au moins un réglage de la température et une unité de commutation pour la mise hors circuit ou la commutation des systèmes de chauffage partiels (4, 16) pour un fonctionnement individuel ou pour le raccordement d'un système de chauffage partiel à l'autre système de chauffage partiel pour un fonctionnement commun,
**caractérisé en ce que**,
un revêtement utilise en tant que support le récupérateur de chaleur (12) du premier système de chauffage partiel (4), de sorte que le récupérateur de chaleur (12) assure une double fonction, et le revêtement forme en tant que surface de rayonnement (17) d'un chauffage rayonnant la source de chaleur du second système de chauffage partiel (16), le revêtement pouvant être activé électriquement et étant appliqué directement ou indirectement en affleurement sur au moins une partie d'une surface avant (13) du récupérateur de chaleur,
le chauffage de bâtiment est un chauffage basse énergie (3), le premier système de chauffage partiel (4) étant conçu comme un système de base pour des puissances de chauffage lors de températures extérieures froides, et
le second système de chauffage partiel (16) est raccordable automatiquement par l'unité de commutation (18) en fonction d'une température extérieure et/ou d'une température intérieure en cas de températures extérieures relativement froides, pour lesquelles la puissance de chauffage du premier système de chauffage partiel (4) ne suffit pas.

2. Chauffage de bâtiment selon la revendication 1, **caractérisé en ce que** le premier système de chauffage partiel (4) comprend une source de chaleur du type au moins d'un module solaire (5) et/ou au moins d'un module de géothermie et/ou d'un refroidisseur d'un générateur de courant d'une installation bio-gaz, le milieu de transport de chaleur étant de l'eau chaude pouvant être pompée de façon commandée.

3. Chauffage de bâtiment selon la revendication 1 ou la revendication 2, **caractérisé en ce que** le chauffage de bâtiment (3) est associé à un générateur de courant éolien et/ou un générateur de courant bio-gaz et/ou un générateur de courant hydraulique pour la production d'énergie électrique pour le second système de chauffage partiel (16).

4. Chauffage de bâtiment selon l'une quelconque des revendications 1 à 3, **caractérisé en ce que**,
les récupérateurs de chaleur sont des corps de chauffe plats (12) avec des surfaces avant (13) largement planes, et les corps de chauffe plats (12) peuvent être montés parallèlement aux surfaces des murs des pièces avec les surfaces avant (13) dirigées dans la pièce.

5. Chauffage de bâtiment selon l'une quelconque des revendications 1 à 4, **caractérisé en ce que** les récupérateurs de chaleur (12) sont fabriqués en métal, et une couche intermédiaire isolante électriquement est appliquée au moins entre une surface avant (13) du récupérateur de chaleur comme surface de support et un revêtement appliqué en tant que surface de rayonnement (17).

6. Chauffage de bâtiment selon une quelconque des revendications 1 à 5, **caractérisé en ce que**
le revêtement (17) est limité par deux conducteurs (24, 25) électriques reliés à celui-ci et est constitué d'un matériau de revêtement qui est composé de
a. 55 à 65 % en fraction molaire d'une substance de base formée de
39 à 49 % en fraction molaire de liant,
18 à 23 % en fraction molaire d'agent isolant,
18 à 24 % en fraction molaire d'agent de dispersion,
12 à 16 % en fraction molaire d'eau distillée,
et
b. 35 à 45 % en fraction molaire de graphite, le liant étant composé de
64 à 79 % en fraction molaire d'eau distillée,
4 à 6 % en fraction molaire d'huile sulfonée,
0,16 à 0,24 % en fraction molaire de phénols ou
0,05 à 0,5 % en fraction molaire de benzisothiazolinone,
15 à 19 % en fraction molaire de caséine,
0,8 à 1,2 % en fraction molaire d'urée,
2 à 3 % en fraction molaire d'agent de dilution alcalin, et
2,5 à 3,5 % en fraction molaire de caprolactame,
la commande de chauffage (18) comprend un générateur d'ondes harmoniques (23) comprenant un composant électrique qui présente lors de l'excitation avec une oscillation d'amorçage une vitesse de croissance du courant à grande pente correspondant à un flanc antérieur de grande pente et est donc adapté à la production d'une partie d'onde harmonique élevée, et
le générateur d'ondes harmoniques (23) est couplé aux deux conducteurs électriques (24, 25) délimitant le revêtement (17) pour une activation du revêtement (17) pour rayonner des ondes électromagnétiques avec un spectre d'oscillation dans la gamme de fréquences des oscillations propres moléculaires.

7. Chauffage de bâtiment selon la revendication 6, **caractérisé en ce que**,
l'huile sulfonée est de préférence de l'huile de ricin sulfatée,
les phénols sont des phénols carbonisés, fabriqués par craquage, ou de préférence on utilise du benzisothiazolinone,
le diluant est un solvant à base d'aromates et/ou à base d'alcool et/ou à base d'ester et/ou à base de cétone,
l'agent isolant est une suie isolante,
l'agent de dispersion est une substance anorganique et/ou organique, monomère et/ou polymère, et
le matériau de revêtement contient un agent thixotrope.

8. Installation de chauffage selon l'une quelconque des revendications 6 ou 7, **caractérisée en ce que**
le composant électrique est un triac et/ou un transistor à effet de champ à double grille, avec les composants de commande électroniques associés connus en soi, et
les conducteurs électriques sur l'élément de chauffe sont configurés essentiellement sous forme de bandes de feuille de cuivre (24, 25) orientées parallèlement et le contact électrique vers le revêtement (17) est configuré sous forme de couplage capacitif et/ou inductif, le revêtement (17) se situant en dessous ou au-dessus des bandes de feuilles de cuivre (24, 25) ou celles-ci étant enrobées dans le revêtement (17).

9. Installation de chauffage selon l'une quelconque des revendications 6 à 8, **caractérisée en ce que** l'effet de chauffage du revêtement (17) peut être commandé et/ou réglé en modifiant les amplitudes et/ou la fréquence des oscillations d'amorçage du générateur d'onde harmonique (23).
